# EUROPEAN PATENT APPLICATION

(11) **EP 4 745 740 A1**
(43) Date of publication of application: **20.05.2026**
(21) Application number: 24843423.5
(22) Date of filing: 11.07.2024
(51) Int. Cl.: G06F 3/0484, G06F 3/041, G06F 3/0488

(54) **ELECTRONIC DEVICE FOR CHANGING AND DISPLAYING CONFIGURATION OF SCREEN ON BASIS OF OCCURRENCE OF EVENT, AND CONTROL METHOD THEREFOR**

(30) Priority: 20.07.2023 KR 20230094918; 31.10.2023 KR 20230148355
(71) Applicant: Samsung Electronics Co., Ltd., Suwon-si, Gyeonggi-do 16677 (KR)
(72) Inventor: OH, Boa, Suwon-si, Gyeonggi-do 16677 (KR); KIM, Wankyu, Suwon-si, Gyeonggi-do 16677 (KR); YIM, Soeyoun, Suwon-si, Gyeonggi-do 16677 (KR); YOO, Hyunwoo, Suwon-si, Gyeonggi-do 16677 (KR); SHIN, Jonwoo, Suwon-si, Gyeonggi-do 16677 (KR); LIM, Yeunwook, Suwon-si, Gyeonggi-do 16677 (KR)
(74) Representative: Gulde & Partner
(86) International application number: PCT/KR2024/009944
(87) International publication number: WO 2025/018705

(57) **Abstract**

Provided are an electronic device for changing and displaying a configuration of a screen on the basis of the occurrence of an event, and a control method therefor. The electronic device according to an embodiment of the present document may comprise a touch screen display and at least one processor, wherein the at least one processor is configured to: display a first screen through the touch screen display; display a second screen which is different from the first screen, through the touch screen display, on the basis that a specified time has elapsed after the first screen is displayed on the touch screen display; and display a third screen which is different from the second screen, through the touch screen display, on the basis of the occurrence of an event for an application corresponding to one object among the some objects.

## Description

### [Technical Field]

Various embodiments of the disclosure relate to an electronic device for changing and displaying a configuration of a screen, based on the occurrence of an event, and a control method therefor.

### [Background Art]

Various services and additional functions provided through electronic devices, for example, a portable electronic device such as a smart phone, are gradually increasing. To increase the utility value of such electronic devices and satisfy the diverse needs of users, communication service providers or electronic device manufacturers are competitively developing electronic devices that provide various functions and differentiate themselves from other companies. Accordingly, various functions provided through electronic devices are also being increasingly advanced.

### [Detailed Description of the Invention]

### [Technical Problem]

Recently, always-on display (AOD) screens have been provided through electronic devices (e.g., smart phones) in various ways. However, AOD screens according to the conventional art merely provided specific information (e.g., time information), and when events occur in an application related to objects displayed on the AOD screen, the AOD screens do not provide any function for changing the screen configuration to reflect the occurrence of such events.

An embodiment of the disclosure may provide an electronic device which provides a clock face (e.g., the first screen 500) including various types of information, and provide important information on an AOD screen in a more emphasized manner by considering the design elements of the clock face and the current state of the electronic device. The clock face may be an informative widget-type cover screen in which various design elements and required functions are combined, and may provide not only time information but also useful functions or useful information to the user.

An embodiment of the disclosure may provide a method for controlling an electronic device which provides a clock face (e.g., the first screen 500) including various types of information and provides important information on the AOD screen in a more emphasized manner by considering the design elements of the clock face and the current state of the electronic device.

### [Technical Solution]

An electronic device according to an embodiment of the disclosure may include a touch screen display and at least one processor, wherein the at least one processor is configured to display a first screen through the touch screen display, the first screen including a first object indicating current time information and a plurality of objects indicating information related to a plurality of applications installed in the electronic device, respectively, display a second screen, different from the first screen, through the touch screen display, based on a specified period of time elapsed after the first screen is displayed on the touch screen display, the second screen including a second object corresponding to the first object and indicating the current time information and some objects corresponding to some applications, determined according to a specified priority among the plurality of applications, respectively, and display a third screen, different from the second screen, through the touch screen display, based on occurrence of an event for an application corresponding to one object among the some objects, the third screen including a third object that is the one object the attributes of which are changed, displayed on the second screen.

According to an embodiment of the disclosure, a method for controlling an electronic device may be provided, the method including: displaying a first screen through a touch screen display of the electronic device, the first screen including a first object indicating current time information and a plurality of objects indicating information related to a plurality of applications installed in the electronic device, respectively, displaying a second screen, different from the first screen, through the touch screen display, based on a specified period of time elapsed after the first screen is displayed on the touch screen display, the second screen including a second object corresponding to the first object and indicating the current time information and some objects corresponding to some applications, determined according to a specified priority among the plurality of applications, respectively, and displaying a third screen, different from the second screen, through the touch screen display, based on occurrence of an event for an application corresponding to one of the some objects.

### [Advantageous Effects]

The electronic device according to an embodiment of the disclosure may provide a function or method for providing a clock face (e.g., a first screen 500) including various types of information, and for providing important information on an AOD screen in a more emphasized manner by considering the design elements of the clock face and the current situation of the electronic device.

### [Brief Description of Drawings]

FIG. 1 is a block diagram of an electronic device in a network environment according to various embodiments of the disclosure.
FIG. 2 illustrates an unfolded state of an electronic device according to an embodiment of the disclosure.
FIG. 3 illustrates a folded state of an electronic device according to an embodiment of the disclosure.
FIG. 4 is an exemplary diagram illustrating a function or operation in which an electronic device according to an embodiment of the disclosure changes a configuration of a second screen, based on the occurrence of an event for an application.
FIGS. 5A, 5B, 5C, 5D, 5E, and 5F are exemplary diagrams illustrating a clock face (e.g., a first screen 500) according to an embodiment of the disclosure.
FIGS. 6A, 6B, 6C, 6D, 6E, and 6F are exemplary diagrams illustrating a second screen displayed on an electronic device when switching from a first screen to the second screen according to an embodiment of the disclosure.
FIGS. 6G and 6H are exemplary diagrams illustrating types of screens according to an embodiment of the disclosure.
FIG. 6I is exemplary diagrams illustrating a screen displayed on an electronic device according to an embodiment of the disclosure.
FIGS. 7A, 7B, 7C, and 7D are exemplary diagrams illustrating a function or operation in which in an electronic device according to an embodiment of the disclosure switches a second screen to a third screen and displays the third screen, based on the occurrence of an event for a specified application.
FIG. 7E is an exemplary diagram illustrating an operation of an electronic device according to an embodiment of the disclosure.
FIG. 8A is an exemplary diagram illustrating a function or operation of determining a plurality of clock faces through an electronic device according to an embodiment of the disclosure.
FIG. 8B is an exemplary diagram illustrating a function or operation in which an electronic device according to an embodiment of the disclosure switches and displays a clock face, based on the occurrence of an event for a specified application.
FIG. 8C is an exemplary diagram illustrating a function or operation of configuring an attribute of one clock face through an electronic device according to an embodiment of the disclosure.
FIG. 9 is an exemplary diagram illustrating a function or operation in which an electronic device according to an embodiment of the disclosure displays a second screen while omitting some objects among objects displayed on the second screen in an ultra power saving mode.
FIGS. 10A, 10B, and 10C are exemplary diagrams illustrating the function or operation described in FIG. 9 from the perspective of a user interface.

### [Mode for Carrying out the Invention]

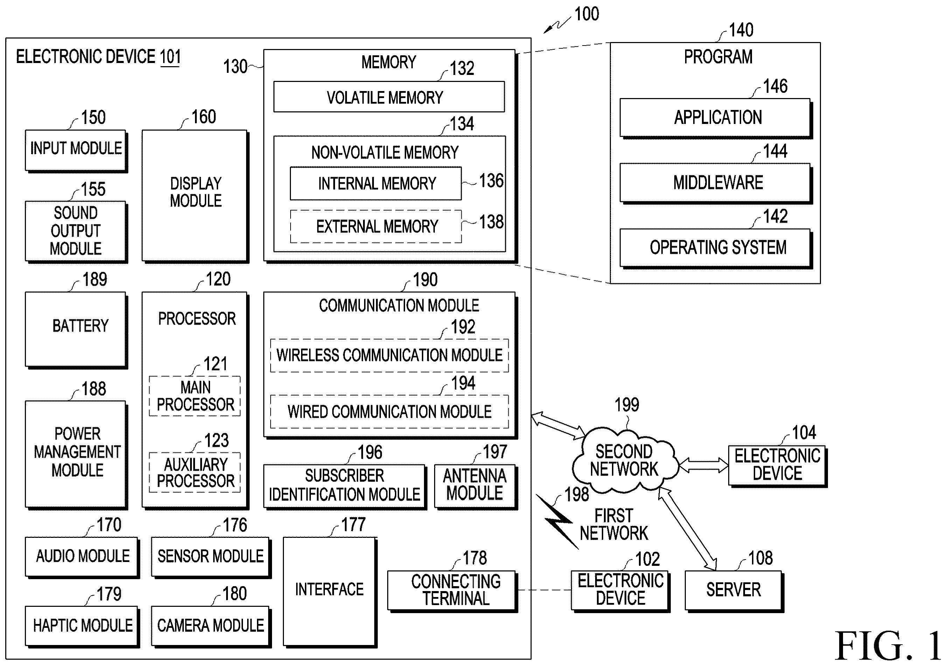

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

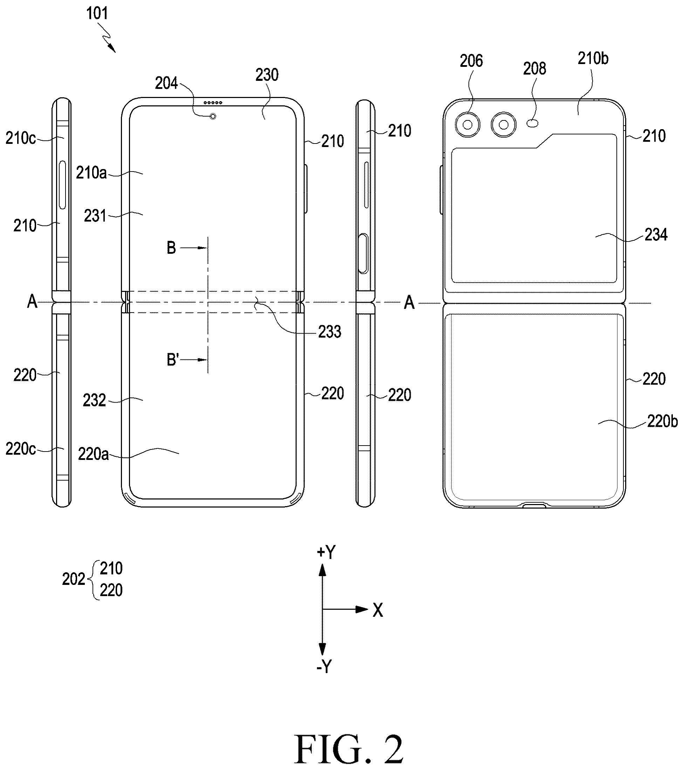

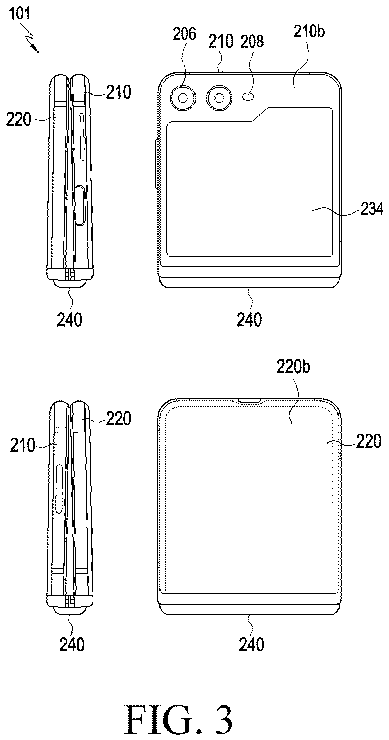

FIG. 2 illustrates an unfolded state of an electronic device according to an embodiment of the disclosure. FIG. 3 illustrates a folded state of an electronic device according to an embodiment of the disclosure.

The configuration of an electronic device 101 in FIGS. 2 and 3 may be partially or entirely the same as the configuration of the electronic device 101 in FIG. 1.

Referring to FIGS. 2 and 3, the electronic device 101 may include a housing 202 for accommodating components of the electronic device 101 and a flexible display 230 (hereinafter, the display 230) disposed in the space formed by the housing 202. According to an embodiment, the housing 202 may also be referred to as a foldable housing. According to an embodiment, the display 230 may also be referred to as a foldable display.

According to an embodiment, the housing 202 may include a first housing 210 and a second housing 220 configured to rotate with respect to the first housing 210.

According to an embodiment, the first housing 210 and/or the second housing 220 may form at least a part of the exterior of the electronic device 101. According to an embodiment, a surface on which the display 230 is visually exposed is defined as the front surface (e.g., a first front surface 210a and a second front surface 220a) of the electronic device 101 and/or the housing 202. A surface opposite to the front surface is defined as the rear surface (e.g., a first rear surface 210b and a second rear surface 220b) of the electronic device 101. A surface that at least partially surrounds the space between the front surface and the rear surface is defined as a side surface (e.g., a first side surface 210c and a second side surface 220c) of the electronic device 101.

According to an embodiment, the first housing 210 may be rotatably connected to the second housing 220 by using a hinge structure. For example, each of the first housing 210 and the second housing 220 may be rotatably connected to the hinge structure 280. Accordingly, the electronic device 101 may be changed to a folded state (e.g., FIG. 3) or an unfolded state (e.g., FIG. 2). In the folded state, the first front surface 210a of the electronic device 101 may face the second front surface 220a, and in the unfolded state, the direction in which the first front surface 210a faces may be substantially the same as the direction in which the second front surface 220a faces. For example, in the unfolded state, the first front surface 210a may be substantially coplanar with the second front surface 220a. According to an embodiment, the second housing 220 may provide movement relative to the first housing 210.

According to an embodiment, the first housing 210 and the second housing 220 may be disposed on both sides of the folding axis A and may have an overall symmetrical shape with respect to the folding axis A. The angle between first housing 210 and the second housing 220 may be changed depending on whether the electronic device 101 is in an unfolded state, a folded state, or an intermediate state between the unfolded state and the folded state.

According to an embodiment, the electronic device 101 may include a hinge cover 240. At least a portion of the hinge cover 240 may be disposed between the first housing 210 and the second housing 220. According to an embodiment, the hinge cover 240 may be covered by portions of the first housing 210 and the second housing 220 or exposed to the outside of the electronic device 101, depending on the state of the electronic device 101. According to an embodiment, the hinge cover 240 may protect the hinge structure from external impacts to the electronic device 101. According to an embodiment, the hinge cover 240 may be interpreted as a hinge housing for protecting the hinge structure.

According to an embodiment, as illustrated in FIG. 2, when the electronic device 101 is in an unfolded state, the hinge cover 240 may be covered by the first housing 210 and the second housing 220 and therefore may not be exposed. In another example, as illustrated in FIG. 3, when the electronic device 101 is in a folded state (e.g., a fully folded state), the hinge cover 240 may be exposed to the outside between the first housing 210 and the second housing 220. As another example, in the case of an intermediate state in which the first housing 210 and the second housing 220 are folded with a certain angle, the hinge cover 240 may be partially exposed to the outside between the first housing 210 and the second housing 220. However, in this case, the exposed area may be smaller than in the fully folded state. In one example, the hinge cover 240 may include a curved surface.

According to an embodiment, the display 230 may visually provide information to the outside (e.g., the user) of the electronic device 101. The display 230 may, for example, include a hologram device or a projector and a control circuit for controlling the corresponding device. According to an embodiment, the display 230 may include a touch sensor configured to detect a touch or a pressure sensor configured to measure the intensity of a force generated by the touch.

According to an embodiment, the display 230 may refer to a display having at least a partial area that is deformable into a flat surface or a curved surface. For example, the display 230 may be formed to vary in response to the relative movement of the second housing 220 with respect to the first housing 210. According to an embodiment, the display 230 may include a folding area 233, a first display area 231 disposed on one side (e.g., above (in the +Y direction)) with respect to the folding area 233, and a second display area 232 disposed on the other side (e.g., below (in the -Y direction). According to an embodiment, the folding area 233 may be located above the hinge structure. For example, at least a portion of the folding area 233 may face the hinge structure 280. According to an embodiment, the first display area 231 may be disposed on the first housing 210 and the second display area 232 may be disposed on the second housing 220. According to an embodiment, the display 230 may be accommodated in the first housing 210 and the second housing 220.

However, the division of the display 230 into areas illustrated in FIG. 2 is merely exemplary, and the display 230 may be divided into a plurality of areas (e.g., four or more areas or two areas) according to structure or function.

In addition, in the embodiment illustrated in FIG. 2, the area of the display 230 may be divided by the folding area 233 or the folding axis A extending in parallel with the X-axis, but in another embodiment, the area of the display 230 may be divided based on another folding area (e.g., a folding area parallel to the Y-axis) or another folding axis (e.g., a folding axis parallel to the Y-axis). According to an embodiment, the display 230 may be coupled to or arranged adjacent to a touch detection circuit, a pressure sensor capable of measuring the intensity (pressure) of a touch, and/or a digitizer configured to detect a magnetic stylus pen.

According to an embodiment, the electronic device 101 may include a rear display 234. The rear display 234 may be disposed to face a direction from that of the display 230. For example, the display 230 may be visually exposed through the front surface (e.g., the first front surface 210a and/or the second front surface 220a) of the electronic device 101, and the rear display 234 may be visually exposed through the rear surface (e.g., the first rear surface 210b) of the electronic device 101. In the disclosure, the rear display 234 may be interchangeably or alternatively referred to as a cover display.

According to an embodiment, the electronic device 101 may include at least one camera module 204 or 206 and a flash 208. According to an embodiment, the electronic device 101 may include a front camera module 204 exposed through the front surface (e.g., the first front surface 210a) and/or a rear camera module 206 exposed through the rear surface (e.g., the first rear surface 210b). The camera module 204 or 206 may include one or more lenses, an image sensor, a flash, and/or an image signal processor. The flash 208 may include a light-emitting diode or a xenon lamp. According to an embodiment, two or more lenses (infrared camera, wide-angle and telephoto lenses) and image sensors may be arranged on one surface of the electronic device 101. The configuration of the front camera module 204 and/or the rear camera module 206 may be partially or entirely the same as the configuration of the camera module 180 in FIG. 1.

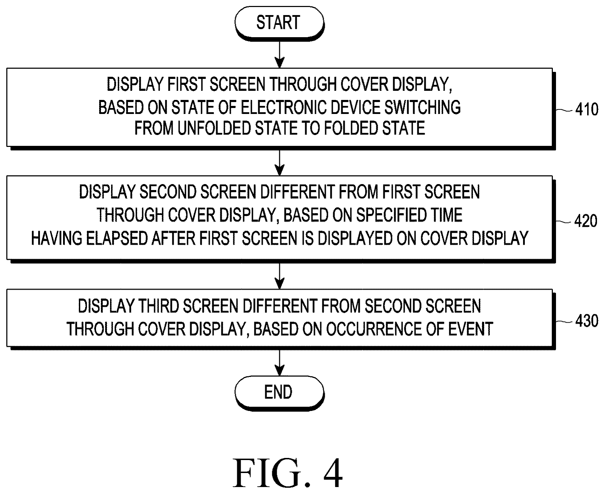

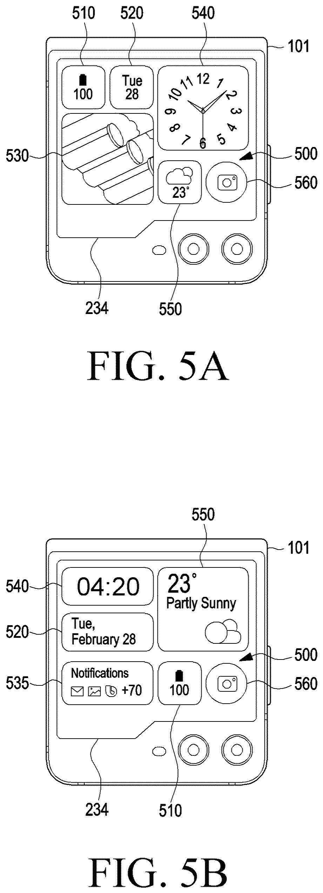

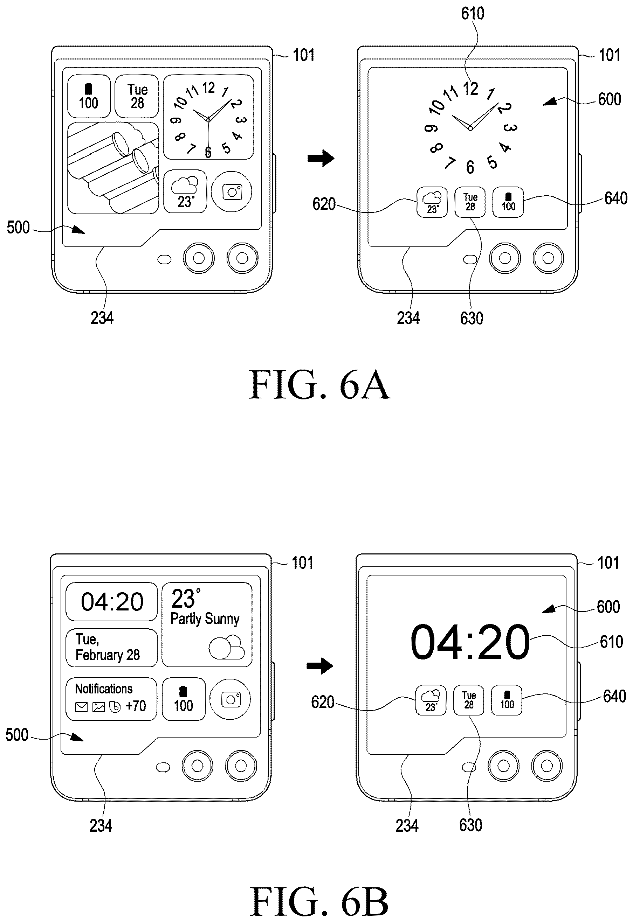

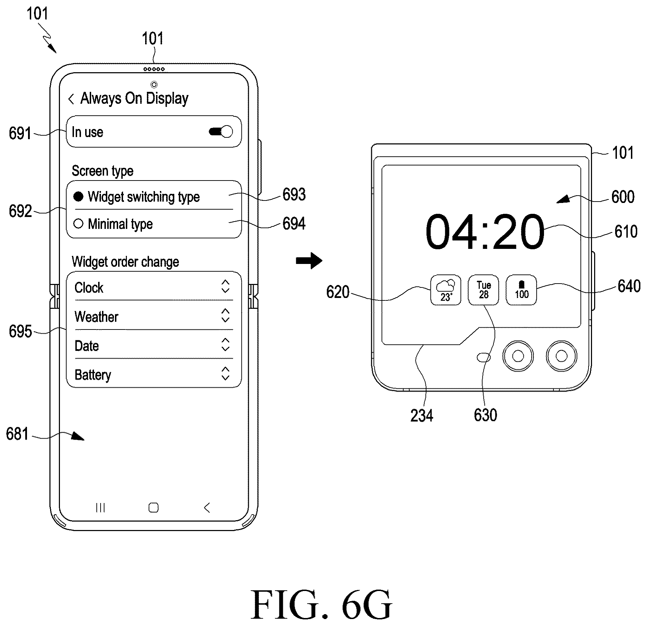

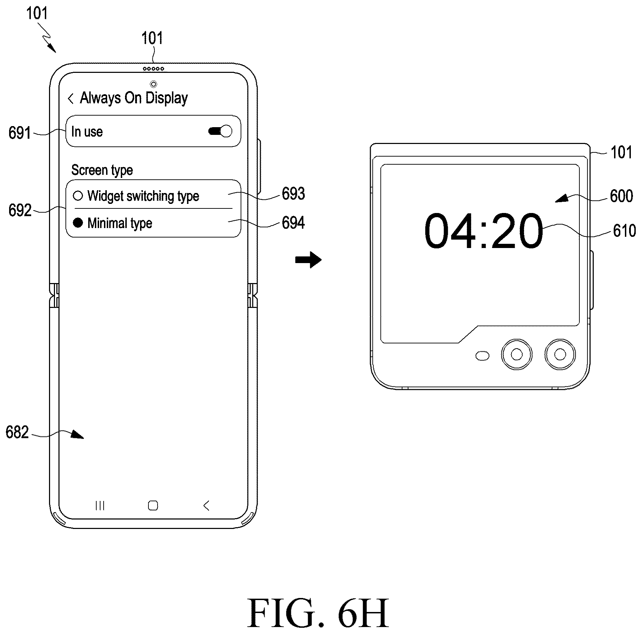

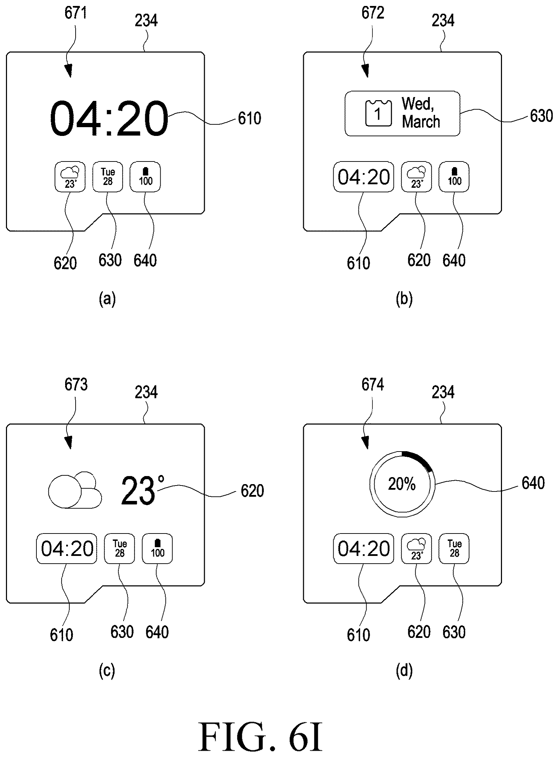

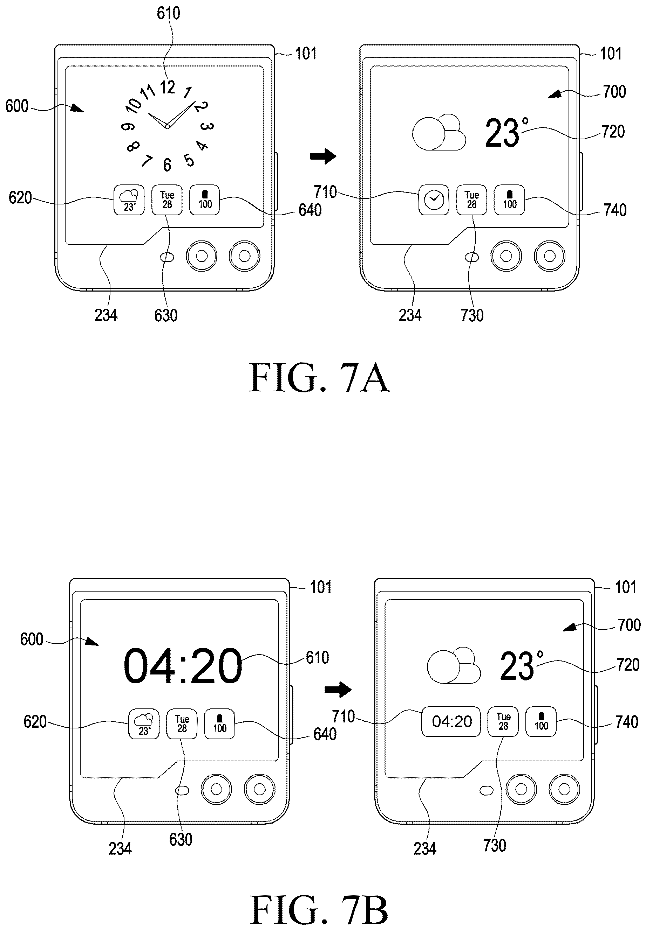

FIG. 4 is an exemplary diagram illustrating a function or operation in which an electronic device 101 according to an embodiment of the disclosure changes the configuration of a second screen 600, based on an event (e.g., an update of weather information) for an application (e.g., a weather application). FIGS. 5A to 5F are exemplary diagrams illustrating a clock face (e.g., a first screen 500) according to an embodiment of the disclosure. FIGS. 6A to 6F are exemplary diagrams illustrating a second screen displayed on an electronic device when switching from a first screen to a second screen according to an embodiment of the disclosure. FIGS. 6G and 6H are exemplary diagrams illustrating types of screens according to an embodiment of the disclosure. FIG. 6I is exemplary diagrams illustrating a screen displayed on an electronic device according to an embodiment of the disclosure. FIGS. 7A to 7D are exemplary diagrams illustrating a function or operation of an electronic device according to an embodiment of the disclosure switches from a second screen to a third screen and display the third screen, based on the occurrence of an event for a specified application.

Referring to FIG. 4, in operation 410, the electronic device 101 according to an embodiment of the disclosure may display a first screen 500 through a touch screen display (e.g., a rear display 234). For example, in the folded state of the electronic device 101, the electronic device 101 may display the first screen 500 through a touch screen display (e.g., the rear display 234). For example, based on the state of the electronic device 101 being changed from an unfolded state to a folded state, the electronic device 101 may display the first screen 500 through the touch screen display (e.g., the rear display 234). The first screen 500 according to an embodiment of the disclosure may also be referred to as a "clock face" in the disclosure. For example, the first screen or clock face may be configured as a screen for a single widget, and the widget for the clock face may include a background image of the clock face, an object related to a clock widget, and an object related to at least one widget different from the clock widget. The first screen 500 according to an embodiment of the disclosure may include, as exemplarily illustrated in FIG. 5A, objects (e.g., a battery widget 510, a calendar widget 520, a gallery widget 530, a clock widget 540, a weather widget 550, and/or a camera widget 560) corresponding to a plurality of applications (e.g., a battery application, a calendar application, a gallery application, a clock application, a weather application, and/or a camera application) installed on an electronic device 101. For example, the first screen 500 may include a first object indicating first information (e.g., current time information) corresponding to a first application (e.g., a clock application) and a plurality of objects indicating information related to a plurality of applications installed in the electronic device 101. The electronic device 101 according to an embodiment of the disclosure may execute an application (e.g., display, on a touch screen display (e.g., the rear display 234), the execution screen of an application) corresponding a widget selected based on a selection input for at least one of the objects (e.g., the battery widget 510, the calendar widget 520, the gallery widget 530, the clock widget 540, the weather widget 550, and/or the camera widget 560) corresponding to the plurality of applications (e.g., the battery application, the calendar application, the gallery application, the clock application, the weather application, and/or the camera application). The objects (e.g., the battery widget 510, the calendar widget 520, the gallery widget 530, the clock widget 540, the weather widget 550, and/or the camera widget 560) according to an embodiment of the disclosure may not execute (e.g., display an execution screen of the application on the touch-screen display (e.g., the rear display 234)) an application corresponding to a selected widget, depending on the user's configuration, despite a user selection input. In other words, depending on the user's configuration or prespecified configuration, the objects (e.g., the battery widget 510, the calendar widget 520, the gallery widget 530, the clock widget 540, the weather widget 550, and/or the camera widget 560) may perform only a function of providing simple information, or may function as shortcuts to the corresponding applications.

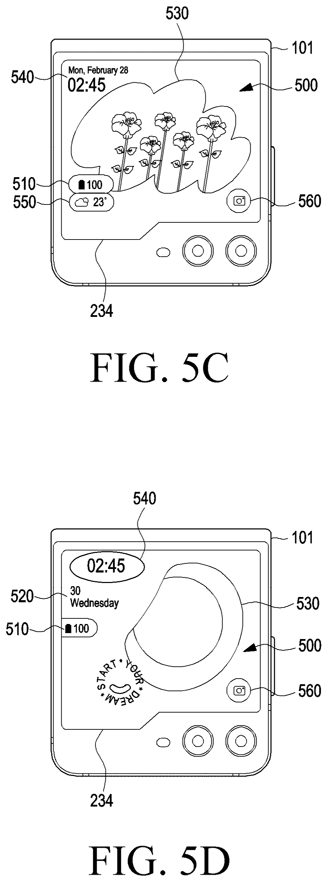

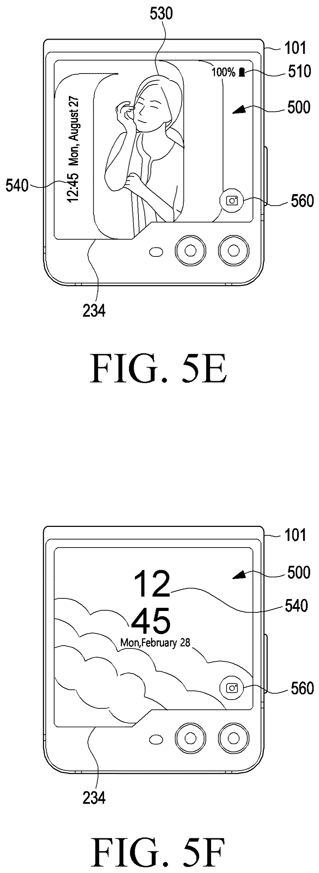

Referring to FIG. 5B, a first screen 500 according to an embodiment of the disclosure may include a battery widget 510, a clock widget 540, a weather widget 550, a calendar widget 520, a notification widget 535, and/or a camera widget 560. The notification widget 535 according to an embodiment of the disclosure may be a widget configured to display the total number of notifications generated through applications such as an email application, an SMS application, and a gallery application, together with the icon of each application. Referring to FIG. 5C, a first screen 500 according to an embodiment of the disclosure may include a battery widget 510, a clock widget 540, a gallery widget 530, a weather widget 550, and/or a camera widget 560. Referring to FIG. 5D, a first screen 500 according to an embodiment of the disclosure may include a battery widget 510, a clock widget 540, a calendar widget 520, a gallery widget 530, and/or a camera widget 560. Referring to FIG. 5E, a first screen 500 according to an embodiment of the disclosure may include a battery widget 510, a clock widget 540, a gallery widget 530, and/or a camera widget 560. Referring to FIG. 5F, a first screen 500 according to an embodiment of the disclosure may include a clock widget 540 and/or a camera widget 560.

In operation 420, the electronic device 101 according to an embodiment of the disclosure may display, through the touch screen display (e.g., the rear display 234), a second screen 600 different from the first screen 500, based on a specified time having elapsed after the first screen 500 is displayed on the touch screen display (e.g., the rear display 234). The second screen 600 according to an embodiment of the disclosure may include an always-on display (AOD) screen. The AOD screen according to an embodiment of the disclosure may refer to a screen that displays specific information (e.g., a notification) on the display of the electronic device 101 in a standby state (e.g., a sleep state), thereby enabling the user to obtain information about various events (e.g., weather information update, call occurrence, text message reception, low battery, etc.). Objects (e.g., a first image 610 indicating time information, a second image 620 indicating weather information, a third image 630 indicating date information, a fourth image 640 indicating battery information, etc.) included in the second screen 600 according to an embodiment of the disclosure may correspond to the objects (e.g., the battery widget 510, the calendar widget 520, the gallery widget 530, the clock widget 540, the weather widget 550, and/or the camera widget 560) included in the first screen 500. According to an embodiment of the disclosure, the electronic device 101 may store information (e.g., a look-up table) defining the association between the objects (e.g., the first image 610 indicating time information, the second image 620 indicating weather information, the third image 630 indicating date information, and the fourth image 640 indicating battery information) included in the second screen 600 and the objects (e.g., the battery widget 510, the calendar widget 520, the gallery widget 530, the clock widget 540, the weather widget 550, and/or the camera widget 560) included in the first screen 500. According to an embodiment of the disclosure, the association between the objects (e.g., the first image 610 indicating time information, the second image 620 indicating weather information, the third image 630 indicating date information, the fourth image 640 indicating battery information, etc.) included in the second screen 600 and the objects (e.g., the battery widget 510, the calendar widget 520, the gallery widget 530, the clock widget 540, the weather widget 550, and/or the camera widget 560) included in the first screen 500 may be learned by an artificial intelligence model and the result of the learning may be stored. The electronic device 101 (e.g., the processor 120) according to an embodiment of the disclosure may display at least some of the objects included in the first screen 500 through the second screen 600 by using such information and/or the result of the learning. The electronic device 101 according to an embodiment of the disclosure may determine objects (e.g., the first image 610 indicating time information, the second image 620 indicating weather information, the third image 630 indicating date information, the fourth image 640 indicating battery information, etc.) to be included in the second screen 600, based on priorities assigned to applications. The priorities according to an embodiment of the disclosure may be assigned in the order of a clock application, a weather application, a calendar application, a battery application, and other applications. For example, when six widgets are included in the first screen 500, the electronic device 101 according to an embodiment of the disclosure may determine four objects to be included in the second screen 600, based on the above-described priority in order to determine the four objects to be included in the second screen 600. However, the six objects and four objects are merely examples mentioned for the sake of explaining the embodiments of the disclosure, and it will be clearly understood by those skilled in the art that various embodiments of the disclosure are not limited thereby. According to an embodiment of the disclosure, depending on a user configuration or a prespecified configuration, the objects (e.g., the first image 610 indicating time information, the second image 620 indicating weather information, the third image 630 indicating date information, the fourth image 640 indicating battery information, etc.) may perform only a function of providing simple information, or may also function as shortcuts to corresponding applications. When a specified time (e.g., 1 minute) has elapsed after displaying the first screen 500, the electronic device 101 according to an embodiment of the disclosure may switch to the second screen 600 and display the second screen 600.

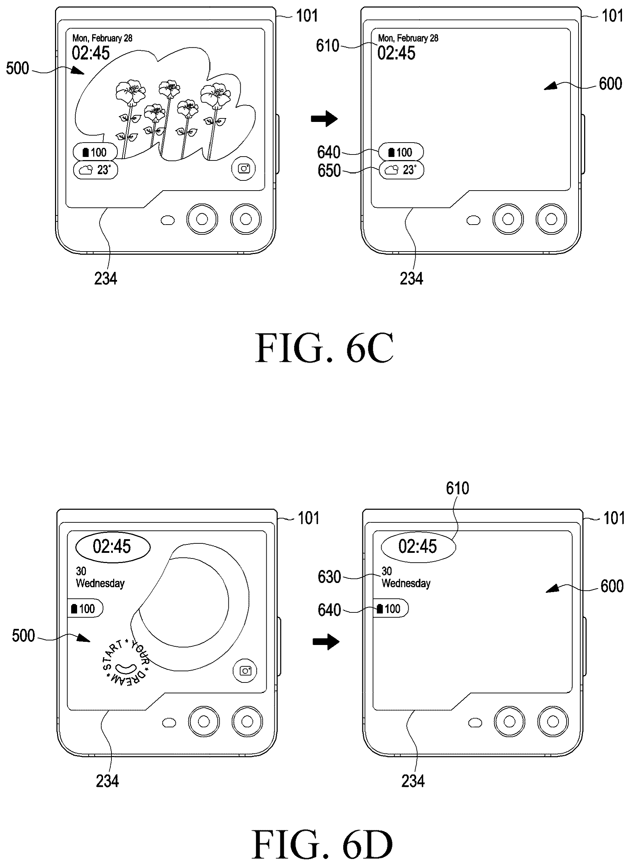

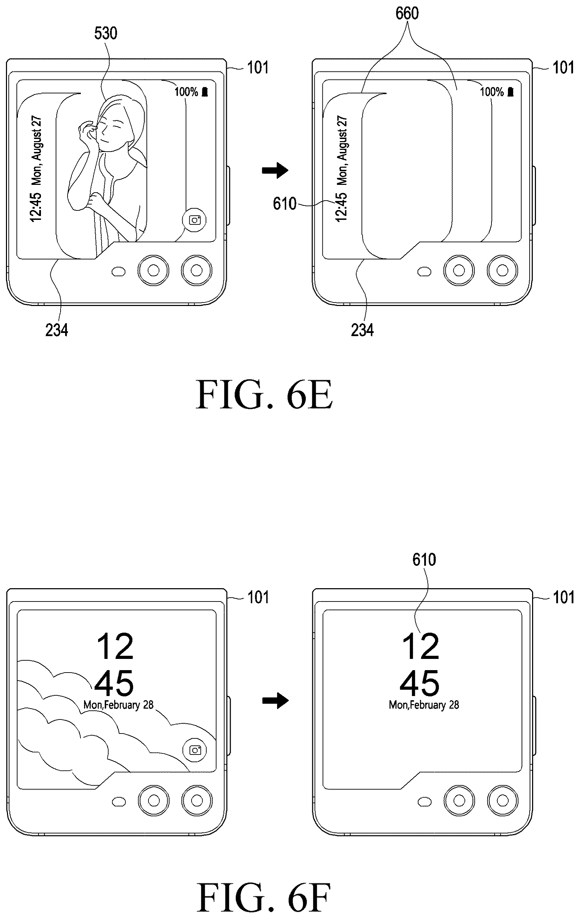

Referring to FIG. 6A and FIG. 5A, the first screen 500 according to an embodiment of the disclosure may include the battery widget 510, the calendar widget 520, the gallery widget 530, the clock widget 540, the weather widget 550, and/or the camera widget 560. Referring to FIG. 6A, the electronic device 101 according to an embodiment of the disclosure may display, on a touch screen display (e.g., the rear display 234), a second screen 600 that includes, based on priorities, a first image 610 indicating time information, a second image 620 indicating weather information, a third image 630 indicating date information, and a fourth image 640 indicating battery information. For example, referring to FIG. 6A, the second screen 600 may include a second object (e.g., the first image 610) indicating first information (e.g., current time information) corresponding to the first object (e.g., the clock widget 540) displayed on the first screen 500, and some objects (e.g., 620, 630, and 640) corresponding to some of a plurality of applications installed in the electronic device 101, which are determined according to specified priorities. Referring to FIG. 6B and FIG. 5B, the first screen 500 according to an embodiment of the disclosure may include the battery widget 510, the calendar widget 520, the gallery widget 530, the clock widget 540, the notification widget 535, the weather widget 550, and/or the camera widget 560. Referring to FIG. 6B, the electronic device 101 according to an embodiment of the disclosure may display, on a touch screen display (e.g., a rear display 234), a second screen 600 that includes, based on priorities, a first image 610 indicating time information, a second image 620 indicating weather information, a third image 630 indicating date information, and a fourth image 640 indicating battery information. Referring to FIG. 6C and FIG. 5C, the first screen 500 according to an embodiment of the disclosure may include the battery widget 510, the gallery widget 530, the clock widget 540, the weather widget 550, and/or the camera widget 560. Referring to FIG. 6C, the electronic device 101 according to an embodiment of the disclosure may display, on a touch screen display (e.g., a rear display 234), a second screen 600 that includes, based on priorities, a first image 610 indicating time information, a fifth image 650 indicating weather information, and a fourth image 640 indicating battery information. Referring to FIG. 6D and FIG. 5D, the first screen 500 according to an embodiment of the disclosure may include the battery widget 510, the calendar widget 520, the gallery widget 530, the clock widget 540, and/or the camera widget 560. Referring to FIG. 6D, the electronic device 101 according to an embodiment of the disclosure may display, on the touch screen display (e.g., the rear display 234), a second screen 600 that includes, based on priorities, a first image 610 indicating time information, a third image 630 indicating date information, and a fourth image 640 indicating battery information. Referring to FIG. 6E and FIG. 5E, the first screen 500 according to an embodiment of the disclosure may include the battery widget 510, the clock widget 540, the gallery widget 530, and/or the camera widget 560. Referring to FIG. 6E, in the second screen 600, an image (e.g., 530) selected by the user may be omitted, and only a surrounding border 660 may be displayed. Referring to FIG. 6F and FIG. 5F, the first screen 500 according to an embodiment of the disclosure may include the clock widget 540 and/or the camera widget 560. Referring to FIG. 6F, the electronic device 101 according to an embodiment of the disclosure may display, on the touch screen display (e.g., the rear display 234), a second screen 600 including only a first image 610 indicating time information, based on the priority.

According to an embodiment of the disclosure, the screen of the clock face and the AOD screen may be configured in pairs, and the AOD screen may be automatically generated according to the screen of a specified clock face. According to an embodiment, as illustrated in FIGS. 6A to 6F, the arrangement positions and sizes of objects included in a clock face corresponding to the first screen 500 may be maintained on the AOD screen, or the arrangement positions and/or shapes of the objects included in the clock face may differ from the arrangement positions and/or shapes of objects disposed on the AOD screen. In addition, at least one processor of the electronic device 101 may automatically generate or configure an AOD screen by using the screen configuration of a clock face. In addition, the electronic device may generate an AOD screen by using a generative AI module to transform at least a portion of a clock face image or an object included in a clock face, while maintaining the style of the clock face and considering the characteristics of the AOD screen. Here, the AOD screen characteristics may include color/contrast reduction, shape simplification, resolution reduction, or conversion to a line drawing image in order to improve power saving performance. In addition, the function or operation of maintaining the style may include processing to exhibit similarity in color, shape, arrangement, size, or the like. In other words, the first screen 500 and the second screen 600 may be configured to form a pair.

The layout of the second screen 600 according to an embodiment of the disclosure may include, as illustrated in FIG. 6A, a layout in which an object displayed as 3×3 (e.g., the first image 610 indicating time information) is arranged at the top, and objects displayed as 1×1 (e.g., the second image 620 indicating weather information, the third image 630 indicating date information, and the fourth image 640 indicating battery information) are arranged below the object displayed as 3×3 (e.g., the first image 610 indicating time information). According to an embodiment of the disclosure, "1×1," "2×2," "3×3," and/or "2×4" may indicate the number of grids that virtually divide the second screen 600. The electronic device 101 according to an embodiment of the disclosure may, when the priorities are the same (e.g., when a plurality of clock widgets are included in the first screen 500), assign the highest priority to an object displayed as "2x2" on the first screen 500, and display, on the second screen 600, an object (e.g., an image) corresponding to the object displayed as "2x2" on the first screen 500.

Referring to FIGS. 6G and 6H, it is possible to understand the type of the second screen 600 according to an embodiment of the disclosure. The type of the second screen 600 (e.g., an AOD screen) may include a first type (e.g., a widget switching type) and a second type (e.g., a minimal type). The electronic device 101 may display, on the display 230, a screen (e.g., 681 in FIG. 6G or 682 in FIG. 6H) for selecting the type of the second screen 600 (e.g., the AOD screen). The screen (e.g., 681 in FIG. 6G or 682 in FIG. 6H) for selecting the type of the second screen 600 (e.g., the AOD screen) may include an object 691 for selecting whether the second screen 600 (e.g., the AOD screen) is used, an object 692 for selecting the type of the second screen 600 (e.g., the AOD screen), and/or an object 695 for selecting a priority. The electronic device 101 may identify the type of the second screen 600 (e.g., the AOD screen) as the first type (e.g., a widget switching type), based on the first type (e.g., the widget switching type) (e.g., 693) being selected on the screen (e.g., 681 in FIG. 6G or 682 in FIG. 6H) for selecting the type of the second screen 600 (e.g., the AOD screen). The electronic device 101 may identify the type of the second screen 600 (e.g., the AOD screen) as the second type (e.g., a minimal type), based on the second type (e.g., the minimal type) (e.g., 694) being selected on the screen (e.g., 681 in FIG. 6G or 682 in FIG. 6H) for selecting the type of the second screen 600 (e.g., the AOD screen). The identified type of the second screen 600 (e.g., the AOD screen) may be used in a subsequent operation of the electronic device 101. The electronic device 101, based on a specified time having elapsed after the first screen 500 is displayed on a touch screen display (e.g., the rear display 234), may display, through the touch screen display (e.g., the rear display 234), the second screen 600 (e.g., the AOD) screen) corresponding to the first screen 500, based on the type of the second screen 600 (e.g., the AOD screen).

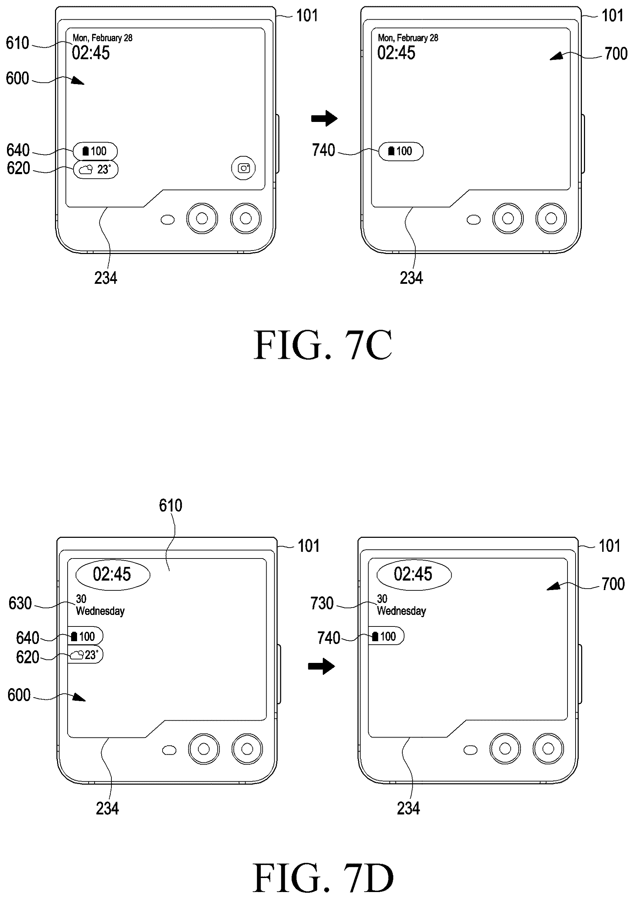

FIG. 6G illustrates an embodiment in which the electronic device 101 displays a second screen 600 (e.g., an AOD screen) of a first type (e.g., a widget switching type) based on the type of the second screen 600 (e.g., the AOD screen) being selected as the first type (e.g., the widget switching type) (e.g., 693). In FIG. 6G, the second screen 600 (e.g., the AOD screen) of the first type (e.g., a widget switching type) may include a first image 610 indicating time information, a second image 620 indicating weather information, a third image 630 indicating date information, and a fourth image 640 indicating battery information. FIG. 6H illustrates an embodiment in which the electronic device 101 displays a second screen 600 (e.g., an AOD screen) of a second type (e.g., a minimal type) (e.g., 694), based on the type of the second screen 600 (e.g., the AOD screen) being selected as the second type (e.g., the minimal type). In FIG. 6H, the second screen 600 (e.g., the AOD screen) of the second type (e.g., a minimal type) may include a first image 610 indicating time information. For example, the number of objects (e.g., images) included in the second screen 600 (e.g., AOD screen) of the first type (e.g., the widget switching type) may be greater than the number of objects (e.g., images) included in the second screen 600 (e.g., the AOD screen) of the second type (e.g., the minimal type). For example, the second screen 600 (e.g., the AOD screen) of the first type (e.g., the widget switching type) may be switched to a third screen 700, as illustrated in FIG. 7A, FIG. 7B, FIG. 7C, and FIG. 7D.

Referring to FIG. 6I, the pair of a second screen 600 (and/or a third screen 700) according to an embodiment of the disclosure may be understood. The electronic device 101 may configure and/or store, based on priorities, a plurality of screens (e.g., 671, 672, 673, and 674) for the second screen 600 (and/or the third screen 700) corresponding to the first screen 500. For example, based on the plurality of screens (e.g., 671, 672, 673, 674), the second screen 600 (e.g., the AOD screen) may be switched to the third screen 700, as illustrated in FIG. 7A, FIG. 7B, FIG. 7C, and FIG. 7D. In FIG. 6I(a), the electronic device 101 may display a second screen 600 (e.g., 671) including a first image 610 indicating time information, a second image 620 indicating weather information, a third image 630 indicating date information, and a fourth image 640 indicating battery information, based on priorities (e.g., the order of time information, weather information, date information, and battery information). Thereafter, in operation 430 to be described below, the electronic device 101 may display a screen corresponding to the occurrence of an event among the plurality of screens (e.g., 671, 672, 673, and 674).

The electronic device 101 according to an embodiment of the disclosure, in operation 430, may display a third screen 700 different from the second screen 600 through the touch screen display (e.g., the rear display 234), based on the occurrence of an event (e.g., an update of weather information, an update of time information, an update of date information, a call occurrence, a text message reception, or a low battery) for an application (e.g., a weather application) corresponding to one of the some objects. The electronic device 101 according to an embodiment of the disclosure may identify whether or not a specified event occurs for each of applications corresponding to the objects (e.g., the first image 610 indicating time information, the second image 620 indicating weather information, the third image 630 indicating date information, the fourth image 640 indicating battery information, etc.) displayed on the second screen 600. For example, when it is identified that the weather information has been updated, the electronic device 101 according to an embodiment of the disclosure may change the attribute of the second image 620 indicating the weather information (e.g., increase the size thereof from "1×1" to "2×4"), and display, on a touch screen display (e.g., the rear display 234), a screen (e.g., the third screen 700) including an image 720 having the changed attribute, as illustrated in FIG. 7A. For example, when it is identified that the weather information has been updated, the electronic device 101 according to an embodiment of the disclosure may change the attribute of the first image 610 indicating time information (e.g., reduce the size thereof from "3×3" to "1×1"), and display, on the touch-screen display (e.g., the rear display 234), a screen (e.g., the third screen 700) including an image 710 having the changed attribute, as illustrated in FIG. 7A. For example, when it is identified that the weather information has been updated, the electronic device 101 according to an embodiment of the disclosure may maintain (e.g., not change) the attribute of the third image 630 indicating date information and the fourth image 640 indicating battery information, and display, on the touch screen display (e.g., the rear display 234), a screen (e.g., the third screen 700) including images 730 and 740 having the maintained (e.g., unchanged) attribute, as illustrated in FIG. 7A. According to an embodiment of the disclosure, information on how the attribute of an object will change based on the occurrence of an event may be stored in the electronic device 101, or the result of the training of an artificial intelligence model may be stored. The electronic device 101 according to an embodiment of the disclosure may determine the amount of change in the attribute of a specified object, based on information about how the attribute of an object will change based on the occurrence of an event and/or the result of learning, and may display the object having the changed attribute on the third screen 700. For example, referring to FIG. 7B, when it is identified that weather information has been updated, the electronic device 101 according to an embodiment of the disclosure may change the attribute of the second image 620 indicating the weather information (e.g., increase the size thereof from "1x1" to "2x4"), and display a screen (e.g., a third screen 700) including an image having the changed attribute on a touch screen display (e.g., the rear display 234). For example, referring to FIG. 7B, when it is identified that weather information has been updated, the electronic device 101 according to an embodiment of the disclosure may change the attribute of the first image 610 indicating time information (e.g., reduce the size of from "2×4" to "1×2") and display a screen (e.g., the third screen 700) including an image 710 having the changed attribute on the touch screen display (e.g., the rear display 234). For example, referring to FIG. 7B, when it is identified that weather information has been updated, the electronic device 101 according to an embodiment of the disclosure may maintain (e.g., not change) the attribute of the third image 630 indicating date information and the fourth image 640 indicating battery information, and display a screen (e.g., a third screen 700) including images 730 and 740 having the maintained (e.g., unchanged) attribute on the touch screen display (e.g., the rear display 234). Referring to FIGS. 7C and 7D, it is identified that an event has occurred (e.g., a change in battery level or a connection to a charging terminal) for a specified application (e.g., a battery application), the electronic device 101 according to an embodiment of the disclosure may, in order to emphasize the occurrence of the event, display a third screen 700 including an object 740 corresponding to the specified application (e.g., the battery application) on the touch screen display (e.g., the rear display 234) without displaying objects 620 corresponding to one or more specified applications (e.g., a weather application).

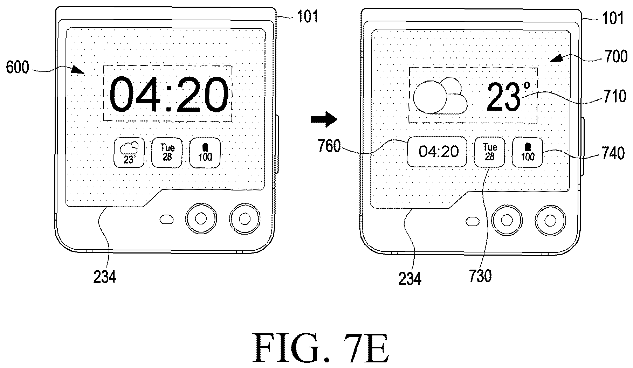

FIG. 7E is an exemplary diagram illustrating an operation of an electronic device according to an embodiment of the disclosure.

According to an embodiment of the disclosure, when an event (e.g., an update of weather information) is identified while a touch screen display (e.g., the rear display 234) is in an OFF state, the electronic device 101 may control the touch screen display (e.g., the rear display 234) to be in an ON state and then display a screen (e.g., 700 in FIG. 7E) reflecting the event (e.g., the update of weather information) through the touch screen display (e.g., the rear display 234). According to an embodiment of the disclosure, when an event (e.g., an update of weather information) is identified while the touch screen display (e.g., the rear display 234) is in an ON state, the electronic device 101 may control the touch screen display (e.g., the rear display 234) to be in an OFF state, and then display a screen (e.g., 700 in FIG. 7E) reflecting the event (e.g., the update of weather information) through the touch screen display (e.g., the rear display 234) in the on state.

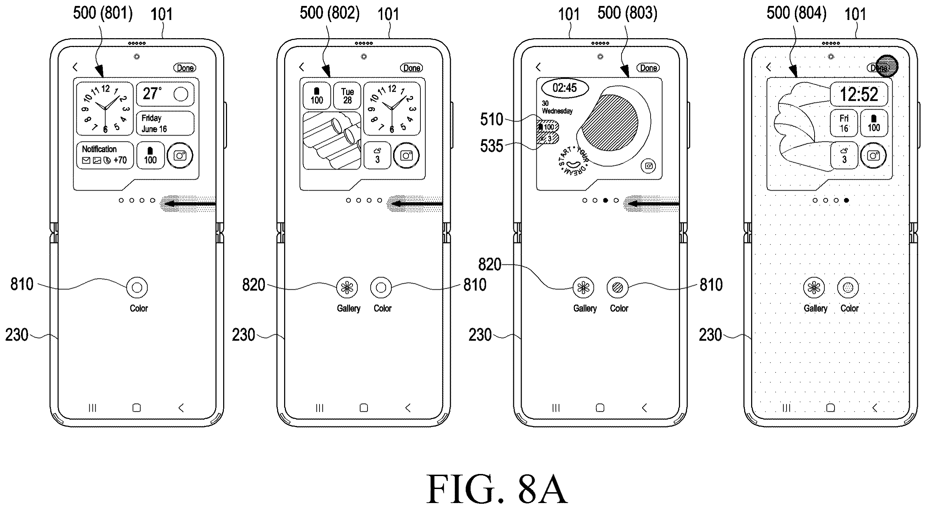

FIG. 8A is an exemplary diagram illustrating a function or operation of determining a plurality of clock faces (e.g., a first screen 500) through an electronic device 101 according to an embodiment of the disclosure. Referring to FIG. 8A, the electronic device 101 according to an embodiment of the disclosure may change and display the background color of a first screen 500 in response to a user input on a first icon 810 configured to change the background color of the first screen 500. Referring to FIG. 8A, the electronic device 101 according to an embodiment of the disclosure may change and display an image of the first screen 500 in response to a user input on a second icon 820 configured to change the image of the first screen 500. For example, when a user input on the second icon 820 configured to change the image of the first screen 500 in FIG. 8A is acquired, a gallery application may be executed to change the image, or specified replacement images may be displayed, and an image selected from the displayed replacement images may be displayed on the first screen 500. The electronic device 101 according to an embodiment of the disclosure may be configured to display a plurality of clock faces (e.g., 801, 802, 803, and 804) in response to a user input (e.g., a selection input for a "complete" icon). In this case, the electronic device may alternately display, as the first screen 500, the plurality of clock faces (e.g., 801, 802, 803, 804) according to a user input on the electronic device (e.g., a user input on a button for switching to a standby state) and/or at a specified time interval. The electronic device 101 according to an embodiment of the disclosure, based on the elapse of a specified time while the plurality of clock faces (e.g., 801, 802, 803, 804) are alternately displayed as the first screen 500, may alternately display a plurality of AOD screens corresponding to the plurality of clock faces (e.g., 801, 802, 803, 804) as a second screen 600. When an event (e.g., a weather information update) is identified while the plurality of clock faces (e.g., 801, 802, 803, 804) are alternately displayed as the first screen 500, the electronic device 101 according to an embodiment of the disclosure may display a clock face (clock faces), related to an event (e.g., the update of weather information, among the plurality of clock faces (e.g., 801, 802, 803, 804), at a higher rank (e.g., may display the clock face first). When an event (e.g., a weather information update) is identified while the plurality of AOD screens corresponding to the plurality of clock faces (e.g., 801, 802, 803, 804) are alternately displayed as the second screen 600, the electronic device 101 according to an embodiment of the disclosure may display an AOD screen (AOD screens), related to the event (e.g., the weather information update), among the plurality of AOD screens, at a higher rank (e.g., may display the AOD screen first).

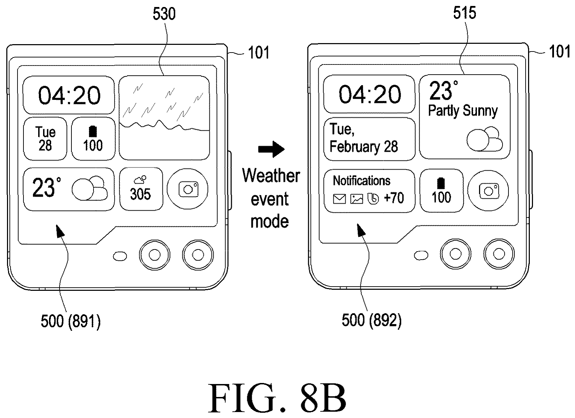

FIG. 8B is an exemplary diagram illustrating a function or operation in which an electronic device 101 according to an embodiment of the disclosure switches and displays a clock face (e.g., a first screen 500), based on the occurrence of an event for a specified application (e.g., a weather application).

Referring to FIG. 8B, in a state in which a first screen 500 (e.g., 891) is displayed, the electronic device 101 according to an embodiment of the disclosure may identify the occurrence of an event for an application corresponding to an object included in the first screen 500. Based on the occurrence of the event for the application corresponding to the object included in the first screen 500, the electronic device 101 according to an embodiment of the disclosure may display a clock face in which a widget 515 corresponding to a weather application is given the highest priority (e.g., a clock face (e.g., 892) configured to display a weather widget as "2×2). In this case, the clock face in which the widget 515 corresponding to the weather application is given the highest priority (e.g., a clock face (e.g., 892) configured to display the weather widget as "2×2") may be displayed immediately after the event occurs (e.g., within a specified time without user input) or may be displayed after a user input (e.g., a user input on a button for switching to a standby state) is acquired.

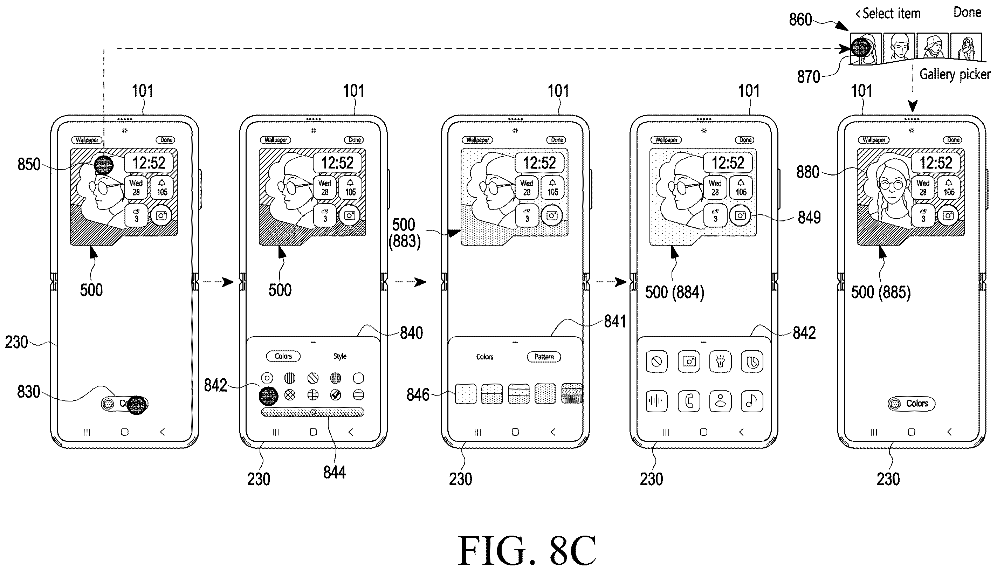

FIG. 8C is an exemplary diagram illustrating a function or operation of configuring an attribute of one clock face through an electronic device 101 according to an embodiment of the disclosure.

Referring to FIG. 8C, the electronic device 101 according to an embodiment of the disclosure may acquire a user input on a third icon 830 for changing the background color of a first screen 500. The electronic device 101 according to an embodiment of the disclosure may display a sub-screen 840 for changing a color when the user input on the third icon 830 is acquired. The sub-screen 840 according to an embodiment of the disclosure may display information 842 about various colors and a slide bar 844 for changing color saturation or the like. When an input (e.g., an input on 842 or 844) for selecting a color is acquired from the user, the electronic device 101 according to an embodiment of the disclosure may display the first screen 500 (e.g., 883) reflecting the selected color and a sub-screen 841 for determining the color attribute. According to an embodiment of the disclosure, the sub-screen 840 for determining the color attribute may display items 846 for changing the attribute (e.g., pattern) of a specified color, such as a gradient effect. The electronic device 101 according to an embodiment of the disclosure, when an input (e.g., an input on one of 846) for selecting the attribute of a specified color is acquired from the user, may display the first screen 500 (e.g., 884) in which the selected attribute is reflected. The electronic device 101 according to an embodiment of the disclosure may display a sub-screen 842 including a list of applications corresponding to replaceable widgets when an input for selecting a camera widget 849 is acquired from the user. When an input for selecting one application from the application list included in the sub-screen 842 is acquired, the electronic device 101 according to an embodiment of the disclosure may replace the camera widget 849 with a widget corresponding to the application selected from the application list. When the electronic device 101 according to an embodiment of the disclosure acquires a user input 850 with respect to an image being displayed on the first screen 500, the electronic device 101 may execute a gallery application for changing the image or display specified replacement images 860. When a user input 870 on one of the images is acquired, the electronic device 101 according to an embodiment of the disclosure may display a selected image 880 on the first screen 500 (e.g., 885).

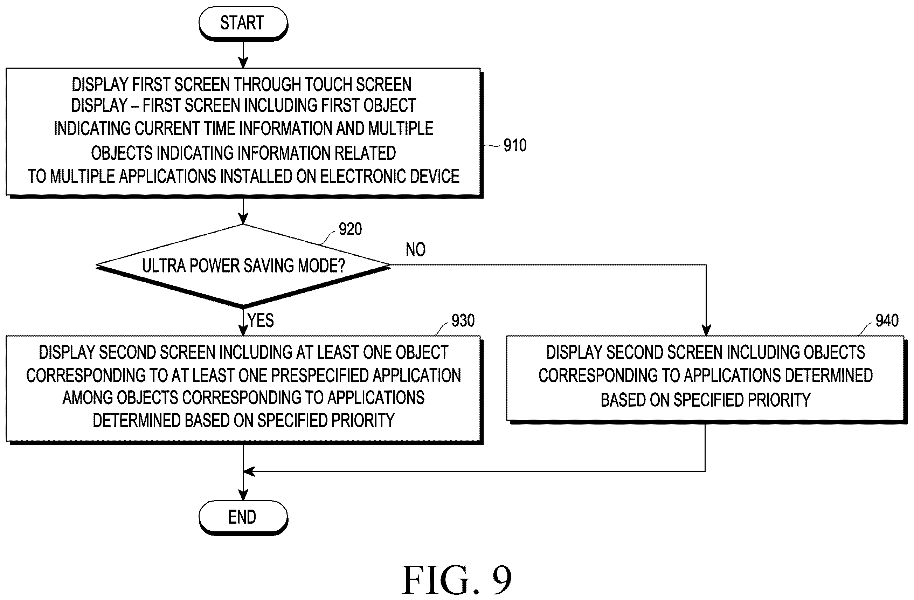

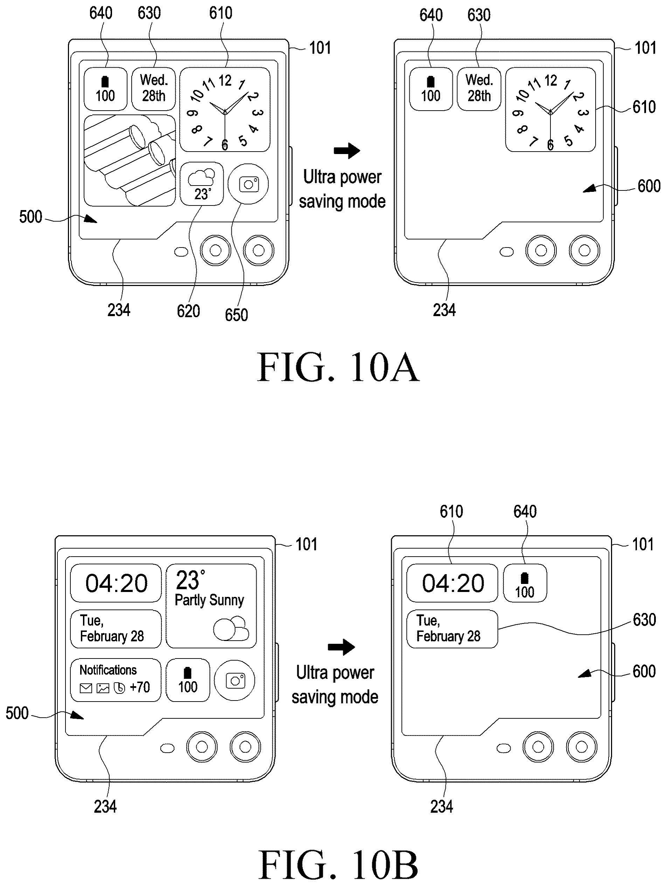

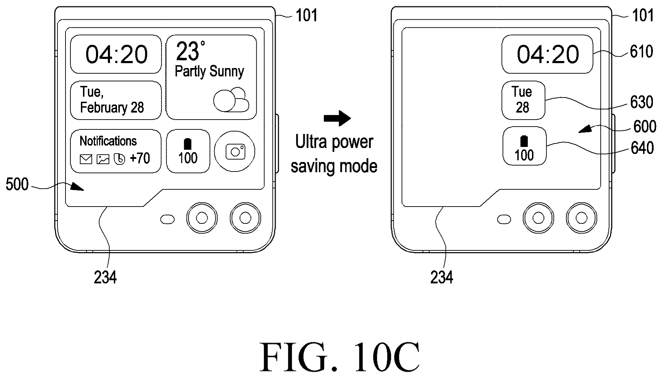

FIG. 9 is an exemplary diagram illustrating a function or operation in which an electronic device 101 according to an embodiment of the disclosure display a second screen 600 while omitting some objects among objects displayed on the second screen 600 in an ultra power saving mode. FIGS. 10A, 10B, and 10C are exemplary diagrams illustrating the function or operation described in FIG. 9 from the perspective of a user interface.

Referring to FIG. 9, the electronic device 101 according to an embodiment of the disclosure may display a first screen 500 through a touch screen display (e.g., the rear display 234). The first screen 500 according to an embodiment of the disclosure may include, as exemplarily illustrated in FIG. 5A, objects (e.g., the battery widget 510, the calendar widget 520, the gallery widget 530, the clock widget 540, the weather widget 550, and/or the camera widget 560) corresponding to a plurality of applications (e.g., a battery application, a calendar application, a gallery application, a clock application, a weather application, and/or a camera application) installed in the electronic device 101.

In operation 920, the electronic device 101 according to an embodiment of the disclosure may determine whether the current state of the electronic device 101 is an ultra-law power mode state after a specified time has elapsed while the first screen 500 is displayed. The ultra power saving mode according to an embodiment of the disclosure may be a mode entered by a user input, and may be a mode entered without a user input when the battery level falls below a specified level.

In operation 930, when the current mode of the electronic device 101 is the ultra power saving mode (operation 920-Yes), the electronic device 101 according to an embodiment of the disclosure may display a second screen 600 including at least one object (e.g., a first image 610 indicating time information, a third image 630 indicating date information, or a fourth image 640 indicating battery information) corresponding to at least one prespecified application, among objects (e.g., the first image 610 indicating time information, a second image 620 indicating weather information, the third image 630 indicating date information, and the fourth image 640 indicating battery information) corresponding to applications determined based on specified priorities. When the mode of the electronic device 101 is the ultra power saving mode, the electronic device 101 according to an embodiment of the disclosure may control the touch screen display (e.g., the rear display 234) such that an object corresponding to a weather application, an image configured by the user, an object corresponding to a notification application, and/or a shortcut icon is not included in and displayed on the second screen 600. FIG. 10A exemplarily illustrates an embodiment of displaying a second screen 600 including at least one object (e.g., a first image 610 indicating time information, a third image 630 indicating date information, and a fourth image 640 indicating battery information) corresponding to at least one prespecified application, among objects (e.g., the first image 610 indicating time information, a second image 620 indicating weather information, the third image 630 indicating date information, the fourth image 640 indicating battery information, and a fifth image 650 indicating a gallery application) corresponding to applications determined based on specified priorities. FIG. 10B exemplarily illustrates an embodiment of displaying a second screen 600 including at least one object (e.g., a first image 610 indicating time information, a third image 630 indicating date information, or a fourth image 640 indicating battery information) corresponding to at least one prespecified application, among objects (e.g., the first image 610 indicating time information, a second image 620 indicating weather information, the third image 630 indicating date information, and the fourth image 640 indicating battery information) corresponding to applications determined based on specified priorities. FIG. 10C exemplarily illustrates an embodiment of displaying a second screen 600 including at least one object (e.g., a first image 610 indicating time information, a third image 630 indicating date information, or a fourth image 640 indicating battery information) corresponding to at least one prespecified application, among objects (e.g., the first image 610 indicating time information, a second image 620 indicating weather information, the third image 630 indicating date information, and the fourth image 640 indicating battery information) corresponding to applications determined based on specified priorities.

In operation 940, when the current mode of the electronic device 101 is not the ultra power saving mode (operation 920 - No), the electronic device 101 according to an embodiment of the disclosure may display a second screen 600 including the objects corresponding to the applications determined based on the specified priorities. The electronic device 101 according to an embodiment of the disclosure may determine objects (e.g., the first image 610 indicating time information, the second image 620 indicating weather information, the third image 630 indicating date information, the fourth image 640 indicating battery information, etc.) to be included in the second screen, based on the priorities assigned to the applications. For example, when six widgets are included in the first screen 500, the electronic device 101 according to an embodiment of the disclosure may determine five objects to be included in the second screen 600, based on the above-described priorities, in order to determine the five objects to be included in the second screen 600.

An electronic device 101 according to an embodiment of the disclosure may include a touch screen display (e.g., the rear display 234) and at least one processor 120. The at least one processor may: display a first screen 500 through the touch screen display (e.g., the rear display 234), the first screen including a first object indicating current time information and a plurality of objects indicating information related to a plurality of applications installed in the electronic device; display a second screen 600 different from the first screen through the touch screen display (e.g., the rear display 234), based on a specified time having elapsed after the first screen is displayed on the touch screen display (e.g., the rear display 234), the second screen including a second object corresponding to the first object and indicating the current time information and some objects corresponding to some applications, among the plurality of applications, which are determined according to specified priorities; and display a third screen 700 different from the second screen through the touch screen display (e.g., the rear display 234), based on the occurrence of an event for an application corresponding to one of the some objects, the third screen including a third object obtained by changing an attribute of the one object displayed on the second screen.

An embodiment of the disclosure may provide a method for controlling an electronic device, the method including an operation of displaying a first screen through a touch screen display (e.g., a rear display 234) of the electronic device, the first screen including a first object indicating current time information and a plurality of objects indicating information related to a plurality of applications installed in the electronic device, an operation of displaying a second screen different from the first screen through the touch screen display (e.g., the rear display 234), based on a specified time having elapsed after the first screen is displayed on the touch screen display (e.g., the rear display 234), the second screen including a second object corresponding to the first object and indicating the current time information, and some objects corresponding to some applications determined according to specified priorities among the plurality of applications, and an operation of displaying a third screen different from the second screen through the touch screen display (e.g., the rear display 234), based on the occurrence of an event for an application corresponding to one of the some objects.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2540) including one or more instructions that are stored in a storage medium (e.g., internal memory 2536 or external memory 2538) that is readable by a machine (e.g., the electronic device 2501). For example, a processor of the machine (e.g., the electronic device 2501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a cover display exposed to outside of the electronic device,
at least one processor, and
memory storing instructions, wherein the instructions, when executed by the at least one processor, cause the electronic device to:
display, through the cover display, a first screen, wherein the first screen includes a first object indicating first information and a plurality of objects indicating information related to a plurality of applications installed on the electronic device, respectively;
based on a specified time elapsed after the first screen is displayed through the cover display, display, through the cover display, a second screen different from the first screen, wherein the second screen includes a second object indicating the first information corresponding to the first object, and some objects respectively corresponding to some applications determined according to a specified priority among the plurality of applications; and,
based on occurrence of an event for an application corresponding to a third object among the some objects, display, through the cover display, a third screen different from the second screen, wherein the third screen includes a fourth object in which a property of the third object is changed, a fifth object in which a property of the second object is changed, and at least one object among the some objects whose property is not changed.

2. The electronic device of claim 1, wherein the instructions cause the electronic device to:
based on the specified time elapsed after the first screen is displayed through the cover display, display, through the cover display, the second screen according to a type of an AOD (always on display) screen corresponding to the first screen.

3. The electronic device of claim 1 or claim 2, wherein the instructions cause the electronic device to:
wherein the first screen includes at least one image specified by a user, and the second screen does not include the at least one image.

4. The electronic device of any one of claim 1 to claim 3, wherein the instructions cause the electronic device to:
based on the occurrence of the event, display the fourth object, in which a size of the third object is enlarged, on the third screen.

5. The electronic device of any one of claim 1 to claim 4, wherein the instructions cause the electronic device to:
based on the occurrence of the above event, display the fifth object, in which a size of the second object is reduced, on the third screen.

6. The electronic device of any one of claim 1 to claim 5, wherein the instructions cause the electronic device to:
based on a mode of the electronic device being an ultra power saving mode, refrain from displaying at least one object among the some objects on the second screen.

7. The electronic device of any one of claim 1 to claim 6, wherein the second screen includes an AOD screen.

8. The electronic device of any one of claim 1 to claim 7, wherein the plurality of applications include a clock application, a weather application, a notification application, a calendar application, and a battery application.

9. The electronic device of any one of claim 1 to claim 8, wherein, in relation to the specified priority, the clock application has the highest priority and the battery application has the lowest priority among the some applications corresponding to the some objects and an application corresponding to the first object, and
wherein the first information is current time information related to the clock application.

10. The electronic device of any one of claim 1 to claim 3, wherein the fourth object includes more information than the third object.

11. A computer-readable non-transitory recording medium configured to store a plurality of instructions executable by at least one processor of an electronic device, the plurality of instructions comprising instructions to:
display a first screen through a cover display exposed to an outside of the electronic device, the first screen comprising a first object indicating first information and a plurality of objects indicating information related to a plurality of applications installed on the electronic device, respectively;
based on a specified period of time elapsed after the first screen is displayed on the cover display, display a second screen different from the first screen through the cover display, the second screen comprising a second object corresponding to the first object and indicating the first information, and some objects corresponding to some applications, determined according to a specified priority among the plurality of applications, respectively; and
based on occurrence of an event for an application corresponding to a third object among the some objects, display a third screen different from the second screen through the cover display, the third screen comprising a fourth object that is the third object, attributes of which are changed, a fifth object that is the second object, attributes of which are changed, and at least one object, attributes of which are not changed, among the some objects.

12. The computer-readable non-transitory recording medium of claim 11, wherein the instruction to display the second screen comprise an instruction to, based on the specified period of time elapsed after the first screen is displayed on the cover display, display the second screen, based on a type of an always-on display (AOD) screen corresponding to the first screen.

13. The computer-readable non-transitory recording medium of claim 11 or 12, wherein the first screen comprises at least one image specified by a user, and
wherein the second screen does not comprise the at least one image.

14. The computer-readable non-transitory recording medium of any one of claims 11 to 13, wherein the plurality of instructions further comprise an instruction to, based on the occurrence of the event, display the fourth object that is the third object, a size of which is enlarged, on the third screen.

15. The computer-readable non-transitory recording medium of any one of claims 11 to 14, wherein a method for controlling the electronic device comprises, based on the occurrence of the event, displaying the fifth object that is the second object, a size of which is reduced, on the third screen.
